# EUROPÄISCHE PATENTSCHRIFT

(11) **EP 0 657 513 B1**
(45) Veröffentlichungstag und Bekanntmachung des Hinweises auf die Patenterteilung: **16.07.1997**
(21) Anmeldenummer: 94118481.4
(22) Anmeldetag: 24.11.1994
(51) Int. Cl.: C09D 5/08, C08G 18/08

(54) **Verwendung einer Polyurethandispersion als Penetrationsgrund und ein Verfahren zur Herstellung von Mehrschichtlackierungen**
Use of a polyurethane dispersion as a deep primer and a process for the preparation of multi-layer coatings
Utilisation d'une dispersion de polyuréthane comme fond de pénétration et un procédé pour la préparation de laques multicouches

(30) Priorität: 07.12.1993 DE 4341602
(43) Veröffentlichungstag der Anmeldung: 14.06.1995
(73) Patentinhaber: BAYER AG, 51368 Leverkusen (DE)
(72) Erfinder: Schwindt, Jürgen, Dr., D-51373 Leverkusen (DE); Reiff, Helmut, Dr., D-51375 Leverkusen (DE)

(56) Entgegenhaltungen:
- EP-A- 0 531 820
- WO-A-93/09265

## Beschreibung

Die Erfindung betrifft die Verwendung von wäßrigen Dispersionen von kationisch modifizierten Polyurethanen als Penetrationsgrund bzw. zur Herstellung eines Penetrationsgrunds für handentrostete Stahloberflächen und ein Verfahren zur Herstellung einer Mehrschichtlackierung auf handentrosteten Stahlkonstruktionen und -teilen.

Im Rahmen der Erfindung soll unter "Penetrationsgrund" das wäßrige Beschichtungsmittel verstanden werden, welches nach Auftrocknen die erste Schicht des mehrschichtigen Lackaufbaus bildet. Diese erste Schicht wird im Rahmen der Erfindung als "Penetrationsgrundierung" bezeichnet.

Unter "handentrosteten" Stahloberflächen sind insbesondere solche zu verstehen, bei denen Altlackschichten und Rost durch Nadelpistole, induktive Entlackung, Schwedenhammer und/oder Bürste entfernt worden sind, bzw. solche, deren schadhafte Stellen von Altlack und Rost nach einer dieser Methoden befreit worden sind und deren funktionstüchtigen Altlackschichten verbleiben. Derartige handentrostete Stahloberflächen entsprechen der schwedischen Norm Svensk Standard SIS 055900.

Die klassische Methode der Sanierung von Stahlbauwerken besteht darin, Altlack und Rost vor der Neulackierung mittels Sandstrahlung praktisch vollständig zu entfernen. Diese Arbeitsweise erfordert u.a. eine Einhausung der zu sanierenden Stahlkonstruktion und eine Entsorgung des Strahlschuttes. Hierdurch stiegen die Kosten für den Korrosionsschutz in der Vergangenheit dramatisch an. Neben dieser Kostensteigerung ergibt sich auch das Problem im Zusammenhang mit dem Mangel an geeignetem Deponierraum für den anfallenden Schutt.

Es besteht daher ein dringendes Bedürfnis für ein Verfahren, welches einerseits eine lacktechnisch einwandfreie Sanierung von Stahlbauwerken gestattet und andererseits nicht mehr auf eine vollständige Entrostung mittels Sandstrahlen angewiesen ist. Das Sanierungsverfahren sollte den lacktechnisch einwandfreien Schutz von handentrosteten Stahloberflächen ermöglichen. Bei dieser, oben skizzierten Methode, besteht der anfallende Schutt ausschließlich aus Altlack und Rost, wodurch die Gesamtmenge an anfallendem Schutt etwa 1 bis 10 Gew.-% der Menge entspricht, die bei der klassischen Entrostung durch Sandstrahlen anfällt.

Wie jetzt überraschend gefunden wurde, gelingt es, die genannte Aufgabe durch Verwendung eines Penetrationsgrunds zu lösen, der im wesentlichen aus einer wäßrigen Dispersion eines kationisch modifizierten Polyurethans der nachstehend näher beschriebenen Art besteht.

Gegenstand der Erfindung ist daher die Verwendung von zu elastischen Filmen auftrocknenden wäßrigen Dispersionen von kationisch modifizierten Polyurethanen mit einem Gehalt an chemisch eingebauten ternären oder quaternären Ammoniumgruppen in einer Menge von 1 bis 120 meq N⁽⁺⁾ pro 100 g Festkörper und einem Gehalt an innerhalb von end- und/oder seitenständig angeordneten Polyetherketten vorliegenden Ethylenoxideinheiten (berechnet als C₂H₄O) von 0 bis 30 Gew.-%, bezogen auf Festkörper, wobei die genannten hydrophilen Struktureinheiten mindestens in einer die Dispergierbarkeit der Polyurethane in Wasser gewährleistenden Menge vorliegen, als oder zur Herstellung eines wäßrigen Pentrationsgrund(s) zur Herstellung von Mehrschichtlackierungen auf handentrosteten Stahlflächen.

Gegenstand der Erfindung ist auch ein Verfahren zur Herstellung einer Mehrschichtlackierung auf handentrosteten Stahlkonstruktionen oder -teilen, dadurch gekennzeichnet, daß man auf die handentrosteten Stahloberflächen durch Streichen, Rollen oder Spritzen eine zur einer Penetrationsgrundierung auftrocknende erste Schicht, bestehend im wesentlichen aus einer wäßrigen, unpigmentierten Dispersion eines kationisch modifizierten Polyurethans aufbringt, in den Restrost penetrieren und bei Umgebungstemperatur trocknen läßt und anschließend den Beschichtungsaufbau durch Auftrag mindestens einer weiteren Lackschicht auf die Penetrationsgrundierung vollendet, wobei das in dem Penetrationsgrund vorliegende Polyurethan 1 bis 120 meq an chemisch eingebauten ternären oder quaternären Ammoniumionen N⁽⁺⁾ und 0 bis 30 Gew.-% an innerhalb und/oder seitenständig angeordneten Polyetherketten vorliegenden Ethylenoxideinheiten (berechnet als C₂H₄O) bei einer die Dispergierbarkeit des Polyurethans gewährleistenden Mindestgesamtmenge dieser hydrophilen Struktureinheiten enthält.

Bei den erfindungsgemäß zu beschichtenden Substraten handelt es sich insbesondere um Stahlkonstruktionen bzw. Stahlteile derartiger Konstruktionen, wie z.B. Brückenkonstruktionen, Kräne, Hochspannungsmasten, Rohrleitungen und andere Anlagen der chemischen Industrie o. dgl., die zwecks Erneuerung des Korrosionsschutzes durch eine der obengenannten Methoden vom Altlack im wesentlichen befreit und handentrostet worden sind und demzufolge noch Restrostanteile aufweisen.

Der erfindungswesentliche Penetrationsgrund besteht im wesentlichen aus einer unpigmentierten, filmbildenden wäßrigen Dispersion eines kationischen Polyurethans. Das in der Dispersion vorliegende Polyurethan weist 1 bis 120, vorzugsweise 5 bis 80 meq pro 100 g Feststoff an chemisch eingebauten ternären oder quaternären Ammoniumgruppen N⁽⁺⁾ und 0 bis 30, vorzugsweise 1 bis 15 Gew.-%, an innerhalb von end- und/oder seitenständig angeordneten Polyetherketten eingebauten Ethylenoxideinheiten auf, wobei die Gesamtmenge dieser hydrophilen Struktureinheiten mindestens so hoch bemessen sein muß, daß die Dispergierbarkeit des Polyurethans in Wasser gewährleistet ist. Grundsätzlich möglich wäre auch die Verwendung von wasserlöslichen Polyurethanen, die dann vorliegen, wenn die genannten Struktureinheiten in sehr hoher, jedoch noch innerhalb der genannten Bereiche liegender Konzentration vorlägen. Bei den Polyurethanen handelt es sich vorzugsweise um lineare Polyadditionsprodukte auf Basis difunktioneller Aufbaukomponenten. Die Dispersionen (bzw. Lösungen) trocknen unter Ausbildung von Lackfilmen auf.

Die Herstellung derartiger Polyurethandispersionen ist an sich bekannt und beispielsweise in den US-Patenten 3 479 310, 4 092 286 oder 4 237 264 beschrieben.

Im Rahmen der gemachten Offenbarung besonders bevorzugte Dispersionen sind solche von Polyurethanen, die durch Neutralisation von eingebauten tert.-Stickstoffatomen erhaltene ternäre Ammoniumgruppen enthalten, wobei zur Neutralisation Säuren mit einem pKa-Wert von kleiner als 3, besonders bevorzugt von kleiner als 2, eingesetzt worden sind. Als Säuren zur Neutralisation der tert.-Stickstoffatome besonders bevorzugt sind Säuren des Phosphors wie Phosphorsäure, phosphorige Säure, Phosphonsäuren, saure Ester dieser Säuren oder Milchsäure. Besonders bevorzugt sind wäßrige Dispersionen von solchen Polyurethanen, die mit Phosphorsäure neutralisierte eingebaute tert.-Stickstoffatome aufweisen.

Die erfindungswesentlichen wäßrigen Dispersionen können als kontinuierliche Phase Wasser oder, herstellungsbedingt, Gemische aus Wasser und wasserlöslichen Lösungsmitteln enthalten. Im allgemeinen besteht die kontinuierliche Phase zu 95 bis 100 Gew.-% aus Wasser.

Der Festkörpergehalt der erfindungsgemäß zu verwendenden Dispersionen liegt im allgemeinen zum Zeitpunkt ihrer Verwendung bei 30 bis 40 Gew.-%. Dieser Festkörpergehalt wird oftmals erst vor Gebrauch der Dispersionen durch Verdünnen mit Wasser einer höherkonzentrierten Handelsform erhalten.

Bei der erfindungsgemäßen Verwendung werden die wäßrigen Dispersionen mittels Pinsel, Rolle oder Spritzpistole, im allgemeinen bei Temperaturen von 5 bis 35°C auf die handentrosteten Stahloberflächen aufgetragen, wobei die Trockenschichtdicke im allgemeinen bei 10 bis 25 µm liegt.

Nach atmosphärischer Trocknung kann die so erhaltene Penetrationsgrundierung mit weiteren an sich bekannten Lackschichten versehen werden. Die zweite Schicht besteht oftmals aus einer praxisüblichen Zinkstaubgrundierung, die als Bindemittel ein unter dem Einfluß von Feuchtigkeit aushärtendes NCO-Prepolymer aufweist (feuchtigkeitshärtender Einkomponenten-Polyurethanlack). Auch andere Grundierungen wie beispielsweise solche auf Basis von Polyurethan-, Alkyd-, Epoxid- oder Acrylatharzen oder anderen für den Korrosionsschutz üblichen Harze können als 2. Schicht auf die erfindungsgemäße Penetrationsgrundierung aufgetragen werden.

Weitere denkbare Lackschichten bestehen beispielsweise in pigmentierten Lacken auf Basis von Polyurethanen, Polyepoxiden, Polyacrylatharzen oder Alkydharzen und gegebenenfalls zusätzlich in Klarlacken auf Basis derartiger Harze.

Grundsätzlich muß jedoch gesagt werden, daß Art und Anzahl der auf die erfindungsgemäße Penetrationsgrundierung aufgetragenen weiteren Lackschichten in keiner Weise erfindungswesentlich sind. Der erfindungswesentliche Punkt besteht vielmehr darin, daß beliebige an sich bekannte Beschichtungsstoffe auf die erfindungsgemäß mit einer Penetrationsgrundierung versehenen, handentrosteten Stahloberflächen aufgetragen werden können und zu Beschichtungen führen, die bezüglich ihrer lacktechnischen Eigenschaften analogen Beschichtungen auf mittels Sandstrahlung völlig entrosteten Oberflächen weitgehend entsprechen.

In den nachfolgenden Beispielen beziehen sich alle Prozentangaben auf das Gewicht.

### Beispiele

**A. Vorbereitung einer Restrost aufweisenden Stahlplatte**
Ein gemäß schwedischer Norm SIS 055900 auf SA 2,5 gestrahlte Baustahloberfläche der Dimension 400 x 400 x 3 mm wurde 2 Jahre unter atmosphärischen Bedingungen gerostet, danach mit einer Wurzelbürste vom Blattrost befreit und mit Leitungswasser abgespült. Eine Oberflächengüte gemäß schwedischer Norm SIS 055900 von ST 2 lag vor.
**B. Beschichtungsaufbau** (erfindungsgemäß)
Mit dem Pinsel werden die nachstehend beschriebenen erfindungsgemäßen Dispersionen D.1 und D.2 in einer Länge von 400 mm, einer Breite von 40 mm und einer Trockenschichtdicke von 15 bis 20 µm nebeneinander auf die Restrost aufweisende Stahlplatte aufgebracht und 24 Stunden unter atmosphärischen Bedingungen getrocknet. Um möglichst frühzeitig die Eignung der Penetrationsgründe erkennen zu können, wurden die beiden Penetrationsgrundierungen in den nachstehenden erfindungsgemäßen Beispielen 1 und 2 nur mit der nachstehend unter C. beschriebenen Zinkstaubgrundierung auf Flächen von 20 x 40 mm² mit einer Trockenschichtdicke von 60 bis 70 µm überschichtet. Die Gesamtschichtdicke des Aufbaus betrug 75 bis 90 µm.
**C. Zinkstaubgrundierung**
Bei der in den nachfolgenden Beispielen eingesetzten Zinkstaubgrundierung handelt es sich um einen Beschichtungsstoff bestehend aus

| | Gew.-Teile |
|---|---|
| ^{®} Desmodur E 21¹⁾ | 92,0 |
| ^{®} Desmodur E 14²⁾ | 36,8 |
| Zusatzmittel MT³⁾ | 55,1 |
| HDK-H15⁴⁾ | 9,2 |
| ^{®} Acronal 700L, flüssig⁵⁾ | 1,8 |
| Blattsilikat BS 30⁶⁾ | 74,5 |
| ^{®} Bayferrox 130 BM⁷⁾ | 11,1 |
| Micro-Talc A.T. 1⁸⁾ | 175,7 |
| ^{®} Stapa 2 n.1.⁹⁾ | 28,0 |
| EWO¹⁰⁾ | 45,6 |
| Lösergemisch Methoxypropylacetat-2/Lackbenzin (2:1) | 266,1 |
| Zinkstaub¹¹⁾ | 190,3 |
| Zusatzmittel OF¹²⁾ | 13,8 |

| | |
|---|---|
| ¹⁾ handelsübliches 1K-PUR-Bindemittel (NCO-Prepolymer), NCO-Gehalt ca. 16 %, Hersteller: Bayer AG | |
| ²⁾ handelsübliches 1K-PUR-Bindemittel (NCO-Prepolymer) NCO-Gehalt ca. 3,4 %, Hersteller: Bayer AG | |
| ³⁾ handelsübliches Entwässerungsmittel (NCO-Prepolymer) NCO-Gehalt ca. 16,5 %, Hersteller: Bayer AG | |
| ⁴⁾ handelsübliches Verdickungsmittel (hochdisperse Kieselsäure) Hersteller:Wacker-Chemie GmbH | |
| ⁵⁾ handelsübliches Polyacrylat-Weichharz Hersteller: BASF AG | |
| ⁶⁾ handelsüblicher mineralischer Füllstoff (Muskovit/Chlorit) Hersteller: Naintsch Mineralwerke | |
| ⁷⁾ handelsübliches anorganisches Pigment (Eisenoxid) Hersteller: Bayer AG | |
| ⁸⁾ handelsüblicher mineralischer Füllstoff (Magnesiumsilikat) Hersteller:Norwegian Talc | |
| ⁹⁾ handelsübliche Aluminiumbronzepaste Hersteller: Eckart-Werke | |
| ¹⁰⁾ handelsüblicher mineralischer Füllstoff (Bariumsulfat) Hersteller: Sachtleben Chemie GmbH | |
| ¹¹⁾ handelsübliches Korrosionsschutzpigment (Zink) Hersteller: Lindgens + Söhne GmbH & Co | |
| ¹²⁾ handelsübliches Stabilisierungsmittel für 1K-PUR-Lacke (Ameisensäureester) Hersteller: Bayer AG | |

**D. Wäßrige Polyurethandispersionen**
**D.1 Erfindungsgemäße wäßrige kationische Dispersion**
Die erfindungsgemäße kationische Dispersion wurde hergestellt durch Umsetzung eines Gemisches aus 139,1 g (0,082 mol) eines Hexandiol-Neopentylglykol-polyadipates und 4,73 g (0,022 mol) eines auf n-Butanol gestarteten Ethylenoxidpropylenoxid-Polyethers vom Molekulargewicht 2250 (83 % Ethylenoxid) mit einem Gemisch aus 20,59 g (0,0928 mol) Isophorondiisocyanat und 15,58 g (0,0928 mol) Hexamethylendiisocyanat und nachfolgender Umsetzung mit 2,38 g (0,048 mol) Hydrazinhydrat, 4,37 g (0,030 mol) Methyl-bis-(3-aminopropyl)-amin, Neutralisation mit 3,05 g (0,027 mol) DL-Milchsäure in 25 ml Wasser und Dispergierung in 0,257 l entsalztem Wasser. Die feinteilige Dispersion weist nachfolgende Daten auf:

| | |
|---|---|
| pH-Wert: | 6,5 |
| Festkörper: | 40 % |
| Ethylenoxidgruppengehalt: | 2 % |
| Teilchengröße: | 190 nm |
| N^{⊕} -Gehalt: | 14,3 meq/100 g. |

**D.2 Erfindungsgemäße wäßrige kationische Dispersion**
Die erfindungsgemäße kationische Dispersion wurde hergestellt durch Umsetzung eines Gemisches aus 32,5 g Polyester auf Basis Phthalsäure-Adipinsäure-Ethylenglykol vom Molekulargewicht 1750, 111 g Polyester auf Basis Phthalsäure-Ethylenglykol vom Molekulargewicht 2000 und 9,2 g eines auf n-Butanol gestarteten Ethylenoxid-propylenoxid Polyethers vom Molekulargewicht 2250 (83 % Ethylenoxid) mit 25 g Hexamethylendiisocyanat und nachfolgender Umsetzung mit 4,4 g N-Methyldiethanolamin, 4 g Hydrazinhydrat und 2,42 g Isophorondiamin, Neutralisation mit 3,7 g 85 %iger Phosphorsäure und Dispergierung in 420 g entsalztem Wasser.
Die feinteilige Dispersion weist nachfolgende Daten auf:

| | |
|---|---|
| pH-Wert: | 5 |
| Festkörper: | 30 % |
| Ethylenoxidgruppengehalt: | 2 % |
| N^{⊕}-Gehalt: | 17,8 meq/100 g. |

### Beispiel 1

Die unter A. beschriebene, handentrostete Stahlplatte wurde per Pinselauftrag mit der Dispersion D.1 in einer Trockenfilmdicke von 15-20 µm beschichtet.

Ein Teil der so vorbehandelten Oberfläche wurde nach Auftrocknen des Penetrationsgrunds per Pinselauftrag mit der unter C. beschriebenen Zinkstaubgrundierung beschichtet (Trockenfilmstärke: 70 µm). Nach Auftrocknen der Zinkstaubgrundierung wurde die beschichtete Stahlplatte während 740 Tagen einer Freiluftbewitterung ausgesetzt. Nach 100, 300, 500 und 740 Tagen wurde jeweils der Rostdurchbruch im Penetrationsgrund, der Rostdurchbruch im zweischichtigen Aufbau und die Zwischenschichthaftung visuell beurteilt und wie folgt benotet: 0 (bester Wert): völlig unverändert, 5 (schlechtester Wert): massiver Rostdurchbruch, Lackschichten praktisch völlig zerstört. Die Ergebnisse sind in nachstehender Tabelle zusammengefaßt.

### Beispiel 2

Beispiel 1 wird wiederholt, jedoch unter Verwendung der Dispersion D.2 (Ergebnisse siehe nachstehende Tabelle).

### Beispiel 3 (Vergleich)

Eine per Sandstrahlen völlig vom Rost befreite Stahlfläche des Typs ST 37 wurde, wie in Beispiel 1 beschrieben, mit der Zinkstaubgrundierung direkt beschichtet (Trockenfilmstärke: 70 µm) und nach Auftrocknen während 740 Tagen der Freiluftbewitterung ausgesetzt. Die dabei festgestellten Beobachtungen bezüglich des Rostdurchbruchs sind ebenfalls in nachfolgender Tabelle aufgeführt.

### Beispiel 4 (Vergleich)

Ein weiteres Muster der handentrosteten Stahlplatte A wurde ohne Vorbehandlung mit erfindungsgemäßen Penetrationsgrund mit der Zinkstaubgrundierung C. beschichtet (Trockenfilmstärke: 70 µm). Nach Auftrocknen der Beschichtung wurde auch diese Platte während 740 Tagen der Freiluftbewitterung ausgesetzt. Die dabei gemachten Beobachtungen bezüglich des Rostdurchbruchs sind ebenfalls in nachfolgender Tabelle zusammengestellt.

| Test | Zeit (d) | Beisp. 1 | Beisp.2 | Beisp.3 | Beisp.4 |
|---|---|---|---|---|---|
| Rostdurchbruch im Penetrationsgrund | 100 | 0 | 0 | | |
| | 300 | 0 | 1 | | |
| | 500 | 1 | 1 | | |
| | 740 | 2 | 2 | | |
| Rostdurchbruch im Aufbau | 100 | 0 | 0 | | |
| | 300 | 0 | 0 | | |
| | 500 | 0 | 0 | | |
| | 740 | 0 | 1 | | |
| Zwischenschichthaftung | 100 | 0 | 0 | | |
| | 300 | 0 | 0 | | |
| | 500 | 0 | 0 | | |
| | 740 | 0 | 0 | | |
| Rostdurchbruch (nur Zn-Grundierung) | 100 | | | 0 | 0 |
| | 300 | | | 0 | 1 |
| | 500 | | | 0,5 | 3 |
| | 740 | | | 1 | 4 |

## Patentansprüche

1. Verwendung von zu elastischen Filmen auftrocknenden wäßrigen Dispersionen von kationisch modifizierten Polyurethanen mit einem Gehalt an chemisch eingebauten ternären oder quaternären Ammoniumgruppen in einer Menge von 1 bis 120 meq N⁽⁺⁾ pro 100 g Festkörper und einem Gehalt an innerhalb von end- und/oder seitenständig angeordneten Polyetherketten vorliegenden Ethylenoxideinheiten (berechnet als C₂H₄O) von 0 bis 30 Gew-% bezogen auf Festkörper, wobei die genannten hydrophilen Struktureinheiten mindestens in einer die Dispergierbarkeit der Polyurethane in Wasser gewährleistenden Menge vorliegen, als oder zur Herstellung eines wäßrigen Pentrationsgrund(s) zur Herstellung von Mehrschichtlackierungen auf handentrosteten Stahlflächen.

2. Verfahren zur Herstellung einer Mehrschichtlackierung auf handentrosteten Stahlkonstruktionen oder -teilen, dadurch gekennzeichnet, daß man auf die handentrosteten Stahloberflächen durch Streichen, Rollen oder Spritzen eine zu einer Penetrationsgrundierung auftrocknende erste Schicht, bestehend im wesentlichen aus einer wäßrigen, unpigmentierten Dispersion eines kationisch modifizierten Polyurethans aufbringt, in den Restrost penetrieren und bei Umgebungstemperatur trocknen läßt und anschließend den Beschichtungsaufbau durch Auftrag mindestens einer weiteren Lackschicht auf die Penetrationsgrundierung vollendet, wobei das in dem Penetrationsgrund vorliegende Polyurethan 1 bis 120 meq an chemisch eingebauten ternären oder quaternären Ammoniumionen N⁽⁺⁾ und 0 bis 30 Gew.-% an innerhalb und/oder seitenständig angeordneten Polyetherketten vorliegenden Ethylenoxideinheiten (berechnet als C₂H₄O) bei einer die Dispergierbarkeit des Polyurethans gewährleistenden Mindestgesamtmenge dieser hydrophilen Struktureinheiten enthält.

## Claims

1. Use of aqueous dispersions, which dry to yield elastic films, of cationically modified polyurethanes having a content of chemically incorporated ternary or quaternary ammonium groups in an amount of 1 to 120 meq of N⁽⁺⁾ per 100 g of solids and a content of ethylene oxide units (calculated as C₂H₄O) within terminally and/or laterally arranged polyether chains of 0 to 30 wt.%, relative to solids, wherein the stated hydrophilic structural units are present in a quantity at least sufficient to ensure the dispersibility of the polyurethanes in water, as or for the production of an aqueous penetrating primer for the production of multilayer lacquer coatings on manually derusted steel surfaces.

2. Process for the production of a multilayer lacquer coating on manually derusted steel structures or components, characterised in that a first layer drying to yield a penetrating primer coat and substantially consisting of an aqueous, unpigmented dispersion of a cationically modified polyurethane is applied onto the manually derusted steel surfaces by brush, roller or spray application, is allowed to penetrate into the residual rust and to dry at ambient temperature and the coating structure is then completed by the application of at least one further lacquer layer onto the penetrating primer, wherein the polyurethane present in the penetrating primer contains 1 to 120 meq of chemically incorporated ternary or quaternary ammonium ions N⁽⁺⁾ and 0 to 30 wt.% of ethylene oxide units (calculated as C₂H₄O) present within terminally and/or laterally arranged polyether chains, the total minimum quantity of these hydrophilic structural units being sufficient to ensure dispersibility of the polyurethane.

## Revendications

1. Utilisation de dispersions aqueuses, donnant par séchage des films élastiques, de polyuréthanes à modification cationique contenant des groupes ammonium tertiaire ou quaternaire incorporés dans la structure chimique en une quantité de 1 à 120 méq de N⁽⁺⁾ pour 100 g de matière solide, et ayant une teneur en unités d'oxyde d'éthylène se trouvant dans des chaînes de polyéther terminales et/ou latérales (calculée en tant que C₂H₄O) de 0 à 30 % en masse par rapport à la matière solide, ces unités de structure hydrophiles se trouvant au moins en une quantité qui garantit la dispersibilité des polyuréthanes dans l'eau, comme couches primaires de pénétration aqueuses ou pour la préparation de telles couches destinées à la préparation de peintures multicouches sur des surfaces métalliques décapées manuellement.

2. Procédé de préparation d'une peinture multicouche sur des constructions ou des pièces métalliques décapées manuellement, caractérisé en ce que l'on applique par enduction, aux rouleaux ou par pulvérisation sur la surface métallique décapée manuellement une première couche donnant par séchage une couche primaire de pénétration, constituée essentiellement d'une dispersion aqueuse non pigmentée d'un polyuréthane à modification cationique, on la laisse pénétrer dans la rouille restante et sécher à la température ambiante, puis on termine le système de revêtement en appliquant au moins une autre couche de peinture sur la couche primaire de pénétration, le polyuréthane de la couche primaire de pénétration contenant 1 à 120 méq d'ions ammonium N⁽⁺⁾ tertiaires ou quaternaires incorporés dans la structure chimique et 0 à 30 % en masse d'unités d'oxyde d'éthylène (calculée en tant que C₂H₄O) se trouvant dans des chaînes de polyéther terminales et/ou latérales, avec une quantité totale minimum de ces unités de structure hydrophiles garantissant la dispersibilité du polyuréthane.
